# FASCICULE DE BREVET EUROPEEN

(11) **EP 0 960 756 B1**
(45) Date de publication et mention de la délivrance du brevet: **12.12.2007**
(21) Numéro de dépôt: 99110282.3
(22) Date de dépôt: 27.05.1999
(51) Int. Cl.: B60H 1/00

(54) **Dispositif de climatisation de véhicule utilisant un fluide réfrigérant à l'état supercritique**
Klimatisierungsvorrichtung unter Verwendung einer Kühlflüssigkeit im superkritischen Zustand
Air conditionning device using a refrigerant fluid in a supercritical state

(30) Priorité: 28.05.1998 FR 9806739
(43) Date de publication de la demande: 01.12.1999
(73) Titulaire: VALEO SYSTEMES THERMIQUES, 78320 Le Mesnil Saint-Denis (FR)
(72) Inventeur: Karl, Stefan, 75015 Paris (FR)
(74) Mandataire: Gamonal, Didier

(56) Documents cités:
- EP-A- 0 756 954
- US-A- 5 245 836
- US-A- 5 291 941

## Description

L'invention concerne un dispositif de climatisation, notamment de l'habitacle d'un véhicule, comprenant une première branche de circuit de fluide réfrigérant contenant un compresseur propre à recevoir le fluide à l'état gazeux et à le comprimer jusqu'à une pression supercritique, et une seconde branche contenant un premier échangeur de chaleur propre à refroidir le fluide comprimé par le compresseur, à pression sensiblement constante, en transférant de la chaleur à un premier milieu extérieur, un premier détendeur propre à abaisser la pression du fluide sortant du premier échangeur de chaleur pour l'amener au moins en partie à l'état liquide et un évaporateur propre à faire passer à l'état gazeux le fluide à l'état liquide provenant du premier détendeur, à pression sensiblement constante, en prélevant de la chaleur d'un second milieu extérieur pour refroidir l'espace à climatiser, le fluide ainsi vaporisé étant ensuite aspiré par le compresseur, le circuit comprenant en outre une troisième branche disposée en parallèle avec la seconde branche et contenant un second détendeur et un second échangeur de chaleur propre à transférer de la chaleur du fluide réfrigérant audit second milieu extérieur pour chauffer ledit espace, des moyens étant prévus pour faire circuler le fluide au choix dans une boucle de climatisation formée par les première et seconde branches ou dans une boucle de chauffage formée par les première et troisième branches.

De tels dispositifs sont décrits par exemple dans WO-A-93/06423, US-A-5 245 836 et US-A-5 291 941. Le fluide réfrigérant utilisé dans ces dispositifs est typiquement le dioxyde de carbone CO₂.

Quant on veut non pas refroidir, mais réchauffer de l'air à envoyer dans l'habitacle d'un véhicule, on utilise habituellement la chaleur produite par le moteur d'entraînement, par exemple en faisant passer l'air en contact avec un radiateur de chauffage traversé par un fluide de refroidissement du moteur.

Lorsque le moteur est froid, on ne peut en tirer de la chaleur pour le chauffage de l'habitacle, ce qui retarde le moment où celui-ci se trouve à la température souhaitée et nuit donc au confort des occupants. Dans certains cas le liquide de refroidissement n'atteint jamais pendant le trajet une température suffisamment élevée pour assurer le confort thermique dans l'habitacle.

Pour accélérer la mise en température de l'habitacle, on peut avoir recours à des dispositifs supplémentaires comportant notamment des brûleurs ou des radiateurs électriques, qui impliquent des investissements importants.

Le but de l'invention est de permettre un chauffage rapide de l'habitacle lorsque le moteur est froid, ou de compléter la quantité de chaleur insuffisante qu'il fournit, sans avoir recours à des moyens spécifiques coûteux.

L'invention vise notamment un dispositif du genre défini en introduction, et prévoit que ledit circuit comprend au moins un échangeur de chaleur interne propre à permettre l'échange de chaleur entre une section de la première branche située en amont du compresseur et, soit une section de la seconde branche située entre le premier échangeur de chaleur et le premier détendeur, soit une section de la troisième branche située en amont du second échangeur de chaleur.

Des caractéristiques optionnelles de l'invention, complémentaires ou alternatives, sont énoncées ci-après:
- Le second détendeur est disposé en amont du second échangeur de chaleur.
- Le second détendeur est disposé en aval du second échangeur de chaleur.
- Un premier capteur de pression est disposé dans la première branche en aval du compresseur.
- Un second capteur de pression est disposé dans la seconde branche entre le premier échangeur de chaleur et le premier détendeur.
- Un clapet anti-retour est disposé dans la seconde branche en aval de l'évaporateur.
- Lesdites sections des première, seconde et troisième branche contiennent respectivement les trois voies d'un échangeur de chaleur interne à trois voies.
- Lesdites sections des première et seconde branches contiennent respectivement les deux voies d'un premier échangeur de chaleur interne à deux voies et lesdites sections des première et troisième branches contiennent respectivement les deux voies d'un second échangeur de chaleur interne à deux voies.
- Ladite section de la troisième branche est située en aval du second détendeur.
- Ladite section de la troisième branche est située en amont du second détendeur.
- Un troisième détendeur est disposé dans la troisième branche en amont de ladite section de la troisième branche.
- Ladite section de la seconde branche est située en amont du second capteur de pression.
- Ledit second milieu extérieur est un flux d'air destiné à être envoyé dans ledit espace.
- L'évaporateur et le second échangeur de chaleur sont disposés en série dans cet ordre dans le trajet dudit flux d'air.
- Une source de chaleur extérieure au circuit de fluide réfrigérant est disposée dans le trajet dudit flux d'air en aval du second échangeur de chaleur.
- Une source de chaleur extérieure au circuit de fluide réfrigérant est disposée dans le trajet dudit flux d'air entre l'évaporateur et le second échangeur de chaleur.
- Des moyens sont prévus pour faire varier la puissance thermique transmise du second échangeur de chaleur audit second milieu extérieur.
- Lesdits moyens pour faire varier la puissance thermique comportent des moyens de réglage du second détendeur et/ou du troisième détendeur.
- Lesdits moyens pour faire varier la puissance thermique comportent des moyens de réglage de la cylindrée ou de la vitesse du compresseur.
- Un réservoir 13 est disposé dans le circuit de climatisation en amont du compresseur (4).

Les caractéristiques et avantages de l'invention seront exposés plus en détail dans la description ci-après, en se référant aux dessins annexés, où des éléments identiques ou analogues sont désignés dans toutes les figures par les mêmes numéros de référence.

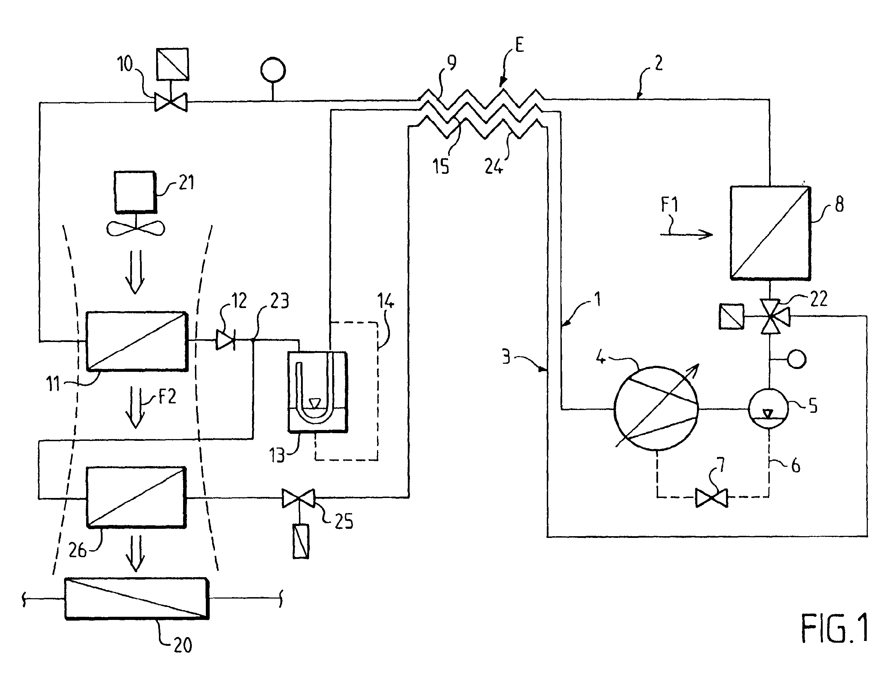

Les figures 1 à 4 sont des représentations schématiques partielles de quatre modes de réalisation d'un dispositif de climatisation de l'habitacle d'un véhicule automobile.

Dans la présente description, l'expression "dispositif de climatisation" désigne un dispositif permettant de régler la température d'un espace tel que l'habitacle d'un véhicule, soit en en extrayant de la chaleur, soit en y apportant de la chaleur, selon les besoins. Chacun des dispositifs illustrés comprend un circuit de fluide réfrigérant comportant trois branches 1, 2 et 3, les branches 1 et 2 formant une boucle dite de climatisation, servant à extraire de la chaleur de l'habitacle, et les branches 1 et 3 formant une boucle de chauffage, servant à apporter de la chaleur à l'habitacle. Ce circuit est prévu pour faire évoluer un fluide réfrigérant, notamment CO₂, de part et d'autre de la pression critique.

On décrira tout d'abord succinctement la boucle de climatisation, qui est pratiquement identique dans les quatre dispositifs et qui est connue en elle-même. Cette boucle comprend un compresseur 4, qui dans les exemples illustrés est à cylindrée variable, cette particularité n'étant pas limitative. Le compresseur 4 est suivi d'un séparateur d'huile 5, à partir duquel l'huile est ramenée au compresseur par une ligne de retour 6 munie d'un détendeur 7. Un échangeur de chaleur 8 permet de transférer à un flux d'air F1 une partie de la chaleur emmagasinée par le fluide réfrigérant lors de sa compression par le compresseur 4. En aval de l'échangeur 8 est disposée une voie 9 d'un échangeur de chaleur interne E permettant un refroidissement supplémentaire du fluide. La voie 9 est suivie d'un détendeur 10, puis d'un évaporateur 11 qui est balayé par un flux d'air F2 destiné à être envoyé dans l'habitacle du véhicule. Un clapet anti-retour 12 est raccordé à la sortie de l'évaporateur, et envoie le fluide dans un réservoir 13 muni d'une ligne de retour de liquide 14. Le réservoir 13 empêche le fluide réfrigérant à l'état liquide de s'introduire dans le compresseur (4). Par ailleurs, le réservoir 13 constitue une réserve de fluide permettant de compenser les variations de charge dans le circuit de réfrigérant. Le fluide à l'état gazeux quittant le réservoir 13 passe dans une voie 15 de l'échangeur de chaleur interne E, à contre-courant de la circulation dans la voie 9, avant de retourner au compresseur 4.

De manière connue également, un radiateur de chauffage 20, parcouru par le fluide de refroidissement du moteur d'entrainement du véhicule, est disposé en aval de l'évaporateur 11 dans le flux d'air F2, lequel est produit par un groupe moto-ventilateur 21.

Selon l'invention, une vanne à trois voies 22 est disposée dans la boucle de climatisation, entre le séparateur d'huile 5 et l'échangeur de chaleur 8, la vanne 22 pouvant être commandée de manière à envoyer le fluide comprimé dans une branche 3 qui aboutit à un point de jonction 23 situé entre le clapet anti-retour 12 et le réservoir 13. La branche 1 précitée va du point 23 à la vanne 22 en passant par le réservoir 13, la voie 15, le compresseur 4 et le séparateur 5, et la branche 2 va de la vanne 22 au point 23 en passant par l'échangeur de chaleur 8, la voie 9, le détendeur 10, l'évaporateur 11 et le clapet 12.

Dans le mode de réalisation selon la figure 1, l'échangeur de chaleur interne E est un échangeur à trois voies permettant l'échange de chaleur entre la voie 15 et, soit la voie 9, soit une troisième voie 24 disposée dans la branche 3 de manière à être parcourue par le fluide à contre-courant de la circulation dans la voie 15. La voie 24 est suivie, dans la branche 3, par un détendeur 25 puis par un échangeur de chaleur 26 disposé dans le trajet du flux d'air F2, entre l'évaporateur 11 et le radiateur 20. La sortie de l'échangeur 26 est reliée au point de jonction 23.

Comme indiqué plus haut, la vanne à trois voies 22 peut être commandée de manière à faire circuler le fluide réfrigérant soit dans les branches 1 et 2, c'est-à-dire dans la boucle de climatisation, le circuit fonctionnant alors de manière connue pour refroidir l'habitacle, soit dans les branches 1 et 3, c'est-à-dire dans la boucle de chauffage, de la chaleur étant alors transférée du fluide réfrigérant au flux d'air F2 par l'échangeur de chaleur 26 pour chauffer l'habitacle.

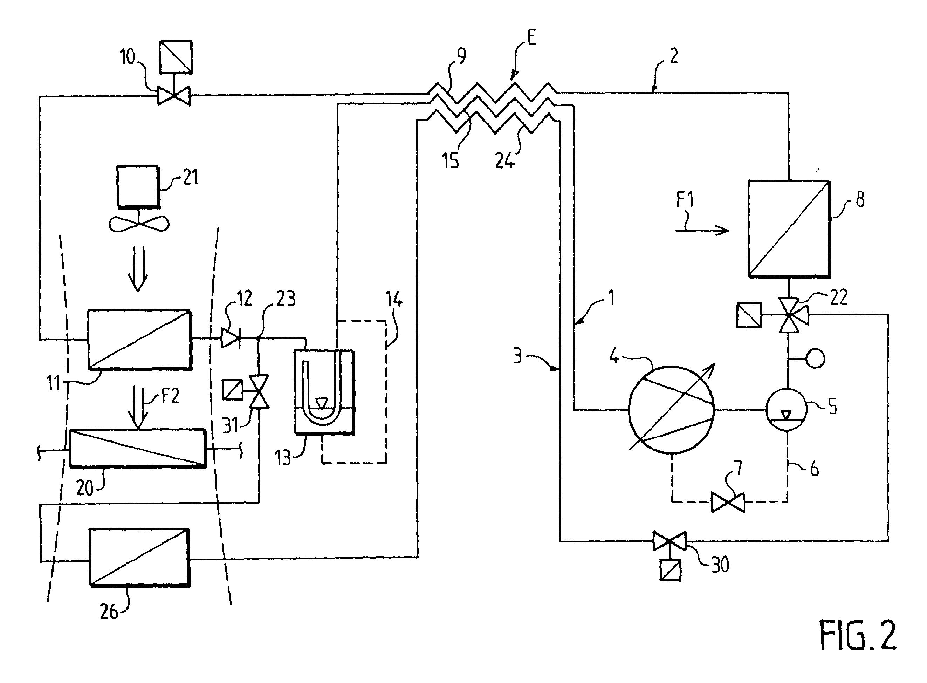

Le circuit de fluide réfrigérant représenté sur la figure 2 diffère de celui décrit en relation avec la figure 1 en ce que le détendeur 25 de la branche 3 est remplacé par deux détendeurs 30 et 31 disposés respectivement en amont de la voie 24 de l'échangeur de chaleur E et en aval de l'échangeur de chaleur 26. En outre, le radiateur de chauffage 20 est interposé entre l'évaporateur 11 et l'échangeur de chaleur 26 sur le trajet du flux d'air F2, au lieu d'être en aval de l'échangeur 26.

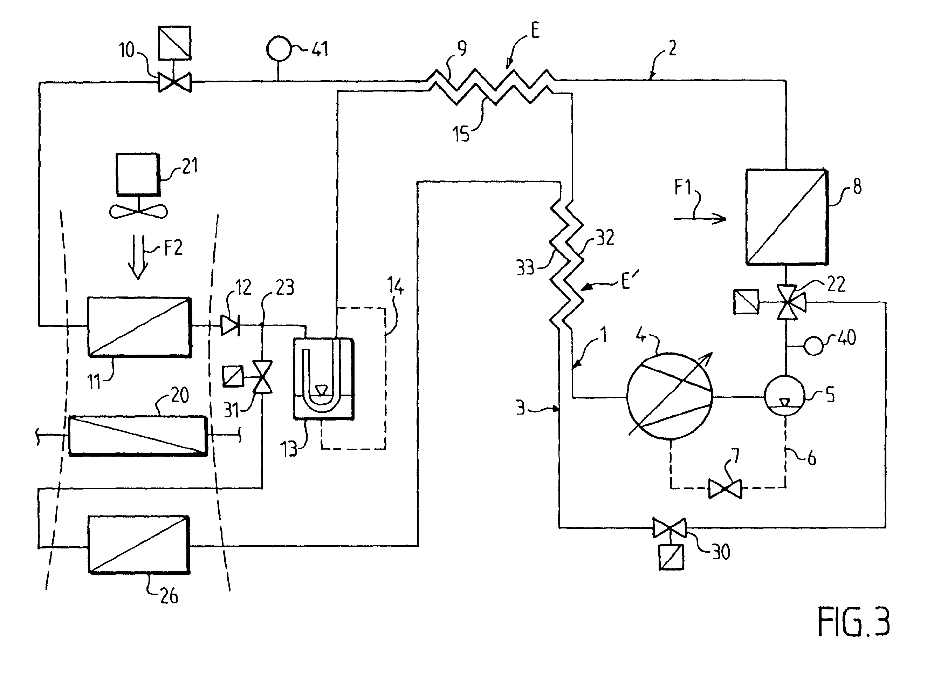

Le dispositif de la figure 3 diffère de celui de la figure 2 en ce que la troisième voie 24 de l'échangeur de chaleur E est supprimée, et en ce qu'il est prévu un second échangeur de chaleur interne à deux voies E', dont une voie 32 est disposée dans la branche 1, entre la voie 15 de l'échangeur E et le compresseur 4, et dont l'autre voie 33 est disposée dans la branche 3 de la même manière que la voie 24 de telle sorte que le fluide y circule à contre-courant de la circulation dans la voie 32.

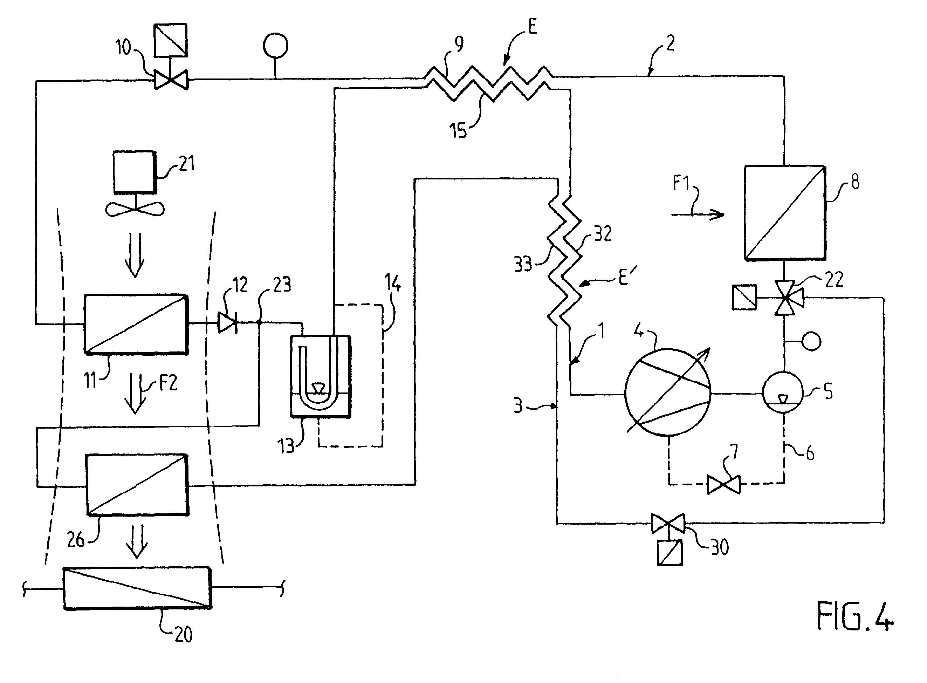

Le dispositif de la figure 4 comporte des échangeurs de chaleur E et E' semblables à ceux de la figure 3, un circuit d'air F2 semblable à celui de la figure 1 et un détendeur 30 semblable à ceux des figures 2 et 3. Toutefois, ce détendeur est le seul de la branche 3, le détendeur 31 étant supprimé.

Dans tous les modes de réalisation, un capteur de pression 40 est disposé dans la branche 1, entre le séparateur d'huile 5 et la vanne à trois voies 22. Aux figures 1, 3 et 4, un second capteur de pression 41 est disposé dans la branche 2, entre la voie 9 de l'échangeur E et le détendeur 10. La puissance de la boucle de climatisation peut être commandée en utilisant le capteur 41, s'il existe, ou le capteur 40. Ce dernier peut être utilisé dans tous les cas pour commander la puissance de la boucle de chauffage. La commande de la boucle de climatisation peut être effectuée de manière connue en agissant sur la cylindrée ou sur la vitesse du compresseur 4, ou sur le détendeur 10. Selon l'invention, la commande de la boucle de chauffage peut être effectuée en agissant sur la cylindrée ou la vitesse du compresseur, ou sur le ou les détendeurs 25, 30, 31.

Les dispositifs illustrés représentent seulement quelques exemples des multiples possibilités résultant de toutes les combinaisons réalisables des caractéristiques décrites telles que:
- présence d'un détendeur unique ou de deux détendeurs dans la branche 3, et position du détendeur unique par rapport à l'échangeur de chaleur 26;
- présence ou non d'un capteur de pression dans la branche 2;
- utilisation d'un échangeur de chaleur interne à trois voies, ou de deux échangeurs internes à deux voies;
- disposition du radiateur de chauffage en amont ou en aval de l'échangeur de chaleur 26.

## Revendications

1. Dispositif de climatisation, comprenant une première branche (1) de circuit de fluide réfrigérant contenant un compresseur (4) propre à recevoir le fluide à l'état gazeux et à le comprimer jusqu'à une pression supercritique, et une seconde branche (2) contenant un premier échangeur de chaleur (8) propre à refroidir le fluide comprimé par le compresseur, à pression sensiblement constante, en transférant de la chaleur à un premier milieu extérieur (F1), un premier détendeur (10) propre à abaisser la pression du fluide sortant du premier échangeur de chaleur pour l'amener au moins en partie à l'état liquide et un évaporateur (11) propre à faire passer à l'état gazeux le fluide à l'état liquide provenant du premier détendeur, à pression sensiblement constante, en prélevant de la chaleur d'un second milieu extérieur (F2) pour refroidir l'espace à climatiser, le fluide ainsi vaporisé étant ensuite aspiré par le compresseur (4), le circuit comprenant en outre une troisième branche (3) disposée en parallèle avec la seconde branche et contenant un second détendeur (25) et un second échangeur de chaleur (26) propre à transférer de la chaleur du fluide réfrigérant audit second milieu extérieur (F2) pour chauffer ledit espace, des moyens (22) étant prévus pour faire circuler le fluide au choix dans une boucle de climatisation (1, 2) formée par les première et seconde branches ou dans une boucle de chauffage (1, 3) formée par les première et troisième branches, **caractérisé en ce que** ledit circuit comprend au moins un échangeur de chaleur interne (E) propre à permettre l'échange de chaleur entre une section de la première branche située en amont du compresseur et, soit une section de la seconde branche située entre le premier échangeur de chaleur et le premier détendeur, soit une section de la troisième branche située en amont du second échangeur de chaleur.

2. Dispositif selon la revendication 1, **caractérisé en ce que** le second détendeur (25) est disposé en amont du second échangeur de chaleur (26).

3. Dispositif selon la revendication 1, **caractérisé en ce que** le second détendeur (31) est disposé en aval du second échangeur de chaleur (26).

4. Dispositif selon l'une des revendications précédentes, **caractérisé en ce qu'**un premier capteur de pression (40) est disposé dans la première branche en aval du compresseur.

5. Dispositif selon la revendication 4, **caractérisé en ce qu'**un second capteur de pression (41) est disposé dans la seconde branche entre le premier échangeur de chaleur et le premier détendeur.

6. Dispositif selon l'une des revendications précédentes, **caractérisé en ce qu'**un clapet anti-retour (12) est disposé dans la seconde branche en aval de l'évaporateur.

7. Dispositif selon l'une des revendications 1 à 6, **caractérisé en ce que** lesdites sections des première, seconde et troisième branche contiennent respectivement les trois voies (15, 9, 24) d'un échangeur de chaleur interne à trois voies (E).

8. Dispositif selon l'une des revendications 1 à 6, **caractérisé en ce que** lesdites sections des première et seconde branches contiennent respectivement les deux voies (15, 9) d'un premier échangeur de chaleur interne à deux voies (E) et que lesdites sections des première et troisième branches contiennent respectivement les deux voies (32, 33) d'un second échangeur de chaleur interne à deux voies (E').

9. Dispositif selon l'une des revendications 1 à 8, rattachée à la revendication 2, **caractérisé en ce que** ladite section (24) de la troisième branche est située en aval du second détendeur (30).

10. Dispositif selon l'une des revendications 1 à 8, rattachée à la revendication 2, **caractérisé en ce que** ladite section (24) de la troisième branche est située en amont du second détendeur (25).

11. Dispositif selon l'une des revendications 1 à 8, rattachée à la revendication 3, **caractérisé en ce qu'**un troisième détendeur (30) est disposé dans la troisième branche en amont de ladite section (24) de la troisième branche.

12. Dispositif selon l'une des revendications 1 à 11, rattachée à la revendication 5, **caractérisé en ce que** ladite section (9) de la seconde branche est située en amont du second capteur de pression (41).

13. Dispositif selon l'une des revendications précédentes, **caractérisé en ce que** ledit second milieu extérieur est un flux d'air (F2) destiné à être envoyé dans ledit espace.

14. Dispositif selon la revendication 13, **caractérisé en ce que** l'évaporateur (11) et le second échangeur de chaleur (26) sont disposés en série dans cet ordre dans le trajet dudit flux d'air (F2).

15. Dispositif selon la revendication 14, **caractérisé en ce qu'**une source de chaleur (20) extérieure au circuit de fluide réfrigérant est disposée dans le trajet dudit flux d'air (F2) en aval du second échangeur de chaleur.

16. Dispositif selon la revendication 14, **caractérisé en ce qu'**une source de chaleur (20) extérieure au circuit de fluide réfrigérant est disposée dans le trajet dudit flux d'air (F2) entre l'évaporateur et le second échangeur de chaleur.

17. Dispositif selon l'une des revendications précédentes, **caractérisé en ce que** des moyens sont prévus pour faire varier la puissance thermique transmise du second échangeur de chaleur (26) audit second milieu extérieur (F2).

18. Dispositif selon la revendication 17, **caractérisé en ce que** lesdits moyens pour faire varier la puissance thermique comportent des moyens de réglage du second détendeur (25, 30) et/ou du troisième détendeur (31).

19. Dispositif selon la revendication 17, **caractérisé en ce que** lesdits moyens pour faire varier la puissance thermique comportent des moyens de réglage de la cylindrée ou de la vitesse du compresseur (4).

20. Dispositif selon la revendication 1 **caractérisé en ce qu'**un réservoir 13 est disposé dans le circuit de fluide réfrigérant en amont du compresseur (4).

## Claims

1. Air conditioning device, including a first coolant circuit branch (1) containing a compressor (4) for receiving the fluid in gaseous state and for compressing it to supercritical pressure, and a second branch (2) containing a first heat exchanger (8) for cooling the fluid compressed by the compressor, at substantially constant pressure, by transferring heat to a first external medium (F1), a first expansion valve (10) for lowering the pressure of the fluid exiting the first heat exchanger in order to bring it at least in part to liquid state and an evaporator (11) for changing to gaseous state the fluid in a liquid state coming from the first expansion valve, at substantially constant temperature, by drawing heat from a second external medium (F2) to cool the space to be air conditioned, with fluid thus vaporised then being sucked by the compressor (4), with the circuit further containing a third branch (3) arranged in parallel with the second branch and containing a second expansion valve (25) and a second heat exchanger (26) for transferring heat from the coolant to said second external medium (F2) to heat said space, with means (22) provided to circulate the fluid either in an air conditioning loop (1, 2) formed by the first and second branches or in a heating loop (1,3) formed by the first and third branches, **characterised in that** said circuit contains at least one internal heat exchanger (E) for allowing the exchange of heat between a section of the first branch located upstream of the compressor and, either a section of the second branch located between the first heat exchanger and the first expansion valve, or a section of the third branch located upstream of the second heat exchanger.

2. Device as set forth in claim 1, **characterised in that** the second expansion valve (25) is arranged upstream of the second heat exchanger (26).

3. Device as set forth in claim 1, **characterised in that** the second expansion valve (31) is arranged downstream of the second heat exchanger (26).

4. Device as claimed in one of the preceding claims, **characterised in that** a first pressure sensor (40) is arranged in the first branch downstream of the compressor.

5. Device as set forth in claim 4, **characterised in that** a second pressure sensor (41) is arranged in the second branch between the first heat exchanger and the first expansion valve.

6. Device as claimed in one of the preceding claims, **characterised in that** a reflux valve (12) is arranged in the second branch downstream of the evaporator.

7. Device as claimed in one of claims 1 to 6, **characterised in that** said sections of the first, second and third branches respectively contain the three channels (15, 9, 24) of an internal three-channel heat exchanger (E).

8. Device as claimed in one of claims 1 to 6, **characterised in that** said sections of the first and second branches respectively contain the two channels (15, 9) of a first internal two-channel heat exchanger (E) and that said sections of the first and second branches respectively contain the two channels (32, 33) of a second internal two-channel heat exchanger (E').

9. Device as claimed in one of claims 1 to 8, tied to claim 2, **characterised in that** said section (24) of the third branch is located downstream of the second expansion valve (30).

10. Device as claimed in one of claims 1 to 8, tied to claim 2, **characterised in that** said section (24) of the third branch is located upstream of second expansion valve (25).

11. Device as claimed in one of claims 1 to 8, tied to claim 3, **characterised in that** a third expansion valve (30) is arranged in the third branch upstream of said section (24) of the third branch.

12. Device as claimed in one of claims 1 to 11, tied to claim 5, **characterised in that** said section (9) of the second branch is located upstream of the second pressure sensor (41).

13. Device as claimed in one of the preceding claims, **characterised in that** the second external medium is an airflow (F2) intended to be sent into said space.

14. Device as set forth in claim 13, **characterised in that** evaporator (11) and the second heat exchanger (26) are arranged in series in this order in the travel path of said airflow (F2).

15. Device as set forth in claim 14, **characterised in that** a heat source (20) external to the coolant circuit is arranged in the travel path of said airflow (F2) downstream of the second heat exchanger.

16. Device as set forth in claim 14, **characterised in that** a heat source (20) external to the coolant circuit is arranged in the travel path of said airflow (F2) between the evaporator and the second heat exchanger.

17. Device as claimed in one of the preceding claims, **characterised in that** means are provided to vary the thermal power transmitted from the second heat exchanger (26) to said second external medium (F2).

18. Device as set forth in claim 17, **characterised in that** said means to vary the thermal power comprise means for adjusting second expansion valve (25, 30) and/or third expansion valve (31).

19. Device as set forth in claim 17, **characterised in that** said means to vary the thermal power comprise means for adjusting the displacement or speed of compressor (4).

20. Device as set forth in claim 1, **characterised in that** a tank 13 is arranged in the coolant circuit upstream of compressor (4).

## Patentansprüche

1. Klimatisierungsvorrichtung, umfassend einen ersten Zweig (1) für den Kältemittelkreislauf, der einen Verdichter (4) aufweist, der dazu dient, das Mittel in gasförmigem Zustand aufzunehmen und es bis auf einen superkritischen Druck zu verdichten, und einen zweiten Zweig (2), der einen ersten Wärmeaustauscher (8), der dazu dient, das vom Verdichter verdichtete Mittel bei einem im Wesentlichen konstanten Druck abzukühlen, indem Wärme an ein erstes Außenmedium (F1) übertragen wird, ein erstes Expansionsventil (10), das dazu dient, den Druck des aus dem ersten Wärmaustauscher austretenden Mittels zu verringern, um es zumindest teilweise in den flüssigen Zustand überzuführen, und einen Verdampfer (11) aufweist, der dazu dient, das in flüssigem Zustand befindliche Mittel, das aus dem ersten Expansionsventil stammt, bei einem im Wesentlichen konstanten Druck in den gasförmigen Zustand überzuführen, indem einem zweiten Außenmedium (F2) Wärme entnommen wird, um den zu klimatisierenden Raum abzukühlen, wobei das **dadurch** verdampfte Mittel anschließend vom Verdichter (4) angesaugt wird, wobei der Kreislauf des Weiteren einen dritten Zweig (3) umfasst, der zum zweiten Zweig parallel laufend angeordnet ist und ein zweites Expansionsventil (25) und einen zweiten Wärmeaustauscher (26) aufweist, der dazu dient, Wärme des Kältemittels an das besagte zweite Außenmedium (F2) zu übertragen, um den besagten Raum zu heizen, wobei Mittel (22) vorgesehen sind, um das Mittel wahlweise in einer Klimatisierungsschleife (1, 2), die vom ersten und zweiten Zweig gebildet wird, oder in einer Heizungsschleife (1, 3), die vom ersten und dritten zweig gebildet wird, zirkulieren zu lassen, **dadurch gekennzeichnet, dass** der besagte Kreislauf zumindest einen internen Wärmeaustauscher (E) umfasst, der dazu dient, den Wärmeaustausch zwischen einer Stelle des ersten Zweigs, die dem Verdichter vorgelagert ist, und entweder einer Stelle des zweiten. Zweigs, die sich zwischen dem ersten Wärmeaustauscher und dem ersten Expansionsventil befindet, oder einer Stelle des dritten Zweigs, die dem zweiten Wärmeaustauscher vorgelagert ist, zu ermöglichen.

2. Vorrichtung nach Anspruch 1, **dadurch gekennzeichnet, dass** das zweite Expansionsventil (25) dem zweiten Wärmeaustauscher (26) vorgelagert ist.

3. Vorrichtung nach Anspruch 1, **dadurch gekennzeichnet, dass** das zweite Expansionsventil (31) dem zweiten Wärmeaustauscher (26) nachgelagert ist.

4. Vorrichtung nach einem der vorhergehenden Ansprüche, **dadurch gekennzeichnet, dass** ein erster Druckfühler (40) im ersten Zweig angeordnet und dem Verdichter nachgelagert ist.

5. Vorrichtung nach Anspruch 4, **dadurch gekennzeichnet, dass** ein zweiter Druckfühler (41) im zweiten Zweig zwischen dem ersten Wärmeaustauscher und dem ersten Expansionsventil angeordnet ist.

6. Vorrichtung nach einem der vorhergehenden Ansprüche, **dadurch gekennzeichnet, dass** ein Rückschlagventil (12) im zweiten Zweig angeordnet und dem Verdampfer nachgelagert ist.

7. Vorrichtung nach einem der Ansprüche 1 bis 6, **dadurch gekennzeichnet, dass** die besagten Stellen des ersten, zweiten und dritten Zweigs jeweils die drei Wege (15, 9, 24) eines internen Dreiwegwärmeaustauschers (E) enthalten.

8. Vorrichtung nach einem der Ansprüche 1 bis 6, **dadurch gekennzeichnet, dass** die besagten Stellen des ersten und zweiten Zweigs jeweils die zwei Wege (15, 9) eines ersten internen Zweiwegwärmeaustauschers (E) enthalten, und dass die besagten Stellen des ersten und dritten Zweigs jeweils die zwei Wege (32, 33) eines zweiten internen Zweiwegwärmeaustauschers (E') enthalten.

9. Vorrichtung nach einem der Ansprüche 1 bis 8, verbunden mit Anspruch 2, **dadurch gekennzeichnet, dass** die besagte Stelle (24) des dritten Zweigs dem zweiten Expansionsventil (30) nachgelagert ist.

10. Vorrichtung nach einem der Ansprüche 1 bis 8, verbunden mit Anspruch 2, **dadurch gekennzeichnet, dass** die besagte Stelle (24) des dritten Zweigs dem zweiten Expansionsventil (25) vorgelagert ist.

11. Vorrichtung nach einem der Ansprüche 1 bis 8, verbunden mit Anspruch 3, **dadurch gekennzeichnet, dass** ein drittes Expansionsventil (30) im dritten Zweig angeordnet und der besagten Stelle (24) des dritten Zweigs vorgelagert ist.

12. Vorrichtung nach einem der Ansprüche 1 bis 11, verbunden mit Anspruch 5, **dadurch gekennzeichnet, dass** die besagte Stelle (9) des zweiten Zweigs dem zweiten Druckfühler (41) vorgelagert ist.

13. Vorrichtung nach einem der vorhergehenden Ansprüche, **dadurch gekennzeichnet, dass** das besagte zweite Außenmedium ein Luftstrom (F2) ist, der dafür bestimmt ist, in den besagten Raum gesendet zu werden.

14. Vorrichtung nach Anspruch 13, **dadurch gekennzeichnet, dass** der Verdampfer (11) und der zweite Wärmeaustauscher (26) in dieser Reihenfolge auf der Strecke des besagten Luftstroms (F2) in Serienschaltung angeordnet sind.

15. Vorrichtung nach Anspruch 14, **dadurch gekennzeichnet, dass** eine Wärmequelle (20) außerhalb des Kältemittelkreislaufes auf der Strecke des besagten Luftstroms (F2) angeordnet und dem zweiten Wärmeaustauscher nachgelagert ist.

16. Vorrichtung nach Anspruch 14, **dadurch gekennzeichnet, dass** eine Wärmequelle (20) außerhalb des Kältemittelkreislaufes auf der Strecke des besagten Luftstroms (F2) zwischen dem Verdampfer und dem zweiten Wärmeaustauscher angeordnet ist.

17. Vorrichtung nach einem der vorhergehenden Ansprüche, **dadurch gekennzeichnet, dass** Mittel vorgesehen sind, um die Wärmeleistung, die vom zweiten Wärmeaustauscher (26) an das zweite Außenmedium (F2) übertragen wird, schwanken zu lassen.

18. Vorrichtung nach Anspruch 17, **dadurch gekennzeichnet, dass** die besagten Mittel, die vorgesehen sind, um die Wärmeleistung schwanken zu lassen, Mittel zur Regulierung des zweiten Expansionsventils (25, 30) und/oder des dritten Expansionsventils (31) umfassen.

19. Vorrichtung nach Anspruch 17, **dadurch gekennzeichnet, dass** die besagten Mittel, die vorgesehen sind, um die Wärmeleistung schwanken zu lassen, Mittel zur Regulierung des Hubvolumens oder der Geschwindigkeit des Verdichters (4) umfassen.

20. Vorrichtung nach Anspruch 1, **dadurch gekennzeichnet, dass** ein Behälter (13) im Kältemittelkreislauf angeordnet und dem Verdichter (4) vorgelagert ist.
